# EUROPEAN PATENT APPLICATION

(11) **EP 2 096 535 A2**
(43) Date of publication of application: **02.09.2009**
(21) Application number: 09151836.5
(22) Date of filing: 02.02.2009
(51) Int. Cl.: G06F 9/44

(54) **Device driver having customizable user interface**

(30) Priority: 07.02.2008 JP 2008027910
(71) Applicant: Ricoh Company, Ltd., Tokyo 143-8555 (JP)
(72) Inventor: Dan, Koji, Yokohama-shi Kanagawa (JP)
(74) Representative: Schwabe - Sandmair - Marx

(57) **Abstract**

A device-driver program includes a switchover unit to switch display screens on a user interface between a first display screen and a second display screen, a setting-item-status-management unit to store data indicative of a sequence position of a setting item arranged in a setting item display area of the first display screen and data indicative of a display-enabled-or-display-disabled status of the setting item, a first arranging unit to arrange the setting item in the setting item display area, a list-status-management unit to store, in a list-status-management table, data indicative of sequence positions of setting items arranged in a list display area of the second display screen and data indicative of a display-enabled-or-display-disabled status of the setting items, and a second arranging unit to arrange a list of the setting items in the list display area of the second display screen in accordance with the list-status-management table.

## Description

### BACKGROUND OF THE INVENTION

### 1. Field of the Invention

The disclosures herein generally relate to device drivers and the methods of customizing the layout of a user interface. The disclosures herein particularly relate to a device driver for which the layout of a user interface can be customized, and also relate to a layout customizing method of customizing a device-driver user interface.

### 2. Description of the Related Art

Embedding a device driver into an operating system (hereinafter referred to as OS) makes it possible for a personal computer (hereinafter referred to as PC) or the like to drive a peripheral device such as a printer or a multifunctional machine. The device driver is software for driving a peripheral device, and serves to assist an OS in controlling the peripheral device.

In general, a device driver is provided with a user interface (hereinafter referred to as UI) for allowing a user to make and change settings. It is known, however, that user preference for the layout (display layout) of a device driver UI tends to widely change from user to user depending on user taste.

In order to satisfy a variety of user needs for the display layout of a device driver UI, software vendors have been managing to design display layouts according to priorities determined at the vendor's end. As a result, the display layouts of device driver UIs are imposed on users by software vendors, failing to satisfy a variety of user needs.

Japanese Patent Application Publication No. 2000-75977 discloses a technology for allowing a user to freely make the display layout of a UI.

However, the mere fact that a user can freely customize the display layout of a device driver UI does not necessarily mean that the customized display layout is user-friendly. The display layout of a device driver UI may be freely customized even with respect to the fine details of each setting item, for example. In such a case, a user with expert knowledge knows what customization is necessary to make it easy to use, and can thus properly design a display layout of the device driver UI that is easy for the user to use.

When the display layout of a device driver UI can be freely customized with respect to the fine details of each setting item, a general user often has no idea about what customization is necessary to make it easy to use, and cannot properly design a display layout of the device driver UI that is easy for the user to use.

Namely, a general user does not wish to freely customize the details of display layout of a device driver UI. A general user rather wishes to be able to design, in a flexible, easy, and swift manner, a display layout of a device driver UI that is easy to use.

Accordingly, there is a need for a device driver and a method of customizing the layout of a user interface that can accommodate user needs for the layout of a device driver user interface in a flexible, easy, and swift manner.

### SUMMARY OF THE INVENTION

It is a general object of at least one embodiment of the present invention to provide a device driver and a method of customizing the layout of a user interface that substantially eliminates one or more problems caused by the limitations and disadvantages of the related art.

In one embodiment, a machine-readable medium having a device-driver program embodied therein for driving a peripheral device, said device-driver program includes a switchover unit configured to switch display screens on a user interface of the device-driver program between a first display screen in which a layout of setting items editable by a user is customizable and a second display screen different from the first display screen; a setting item status management unit configured to store, in a setting item status management table, data indicative of a sequence position of a setting item arranged in a setting item display area of the first display screen and data indicative of a display-enabled-or-display-disabled status of the setting item; a first arranging unit configured to arrange the setting item in the setting item display area of the first display screen in accordance with the setting item status management table; a list status management unit configured to store, in a list status management table, data indicative of sequence positions of setting items arranged in a list display area of the second display screen and data indicative of a display-enabled-or-display-disabled status of the setting items; and a second arranging unit configured to arrange a list of the setting items in the list display area of the second display screen in accordance with the list status management table.

In another embodiment, a method of customizing a layout of a user interface of a device driver for driving a peripheral device includes: switching display screens on a user interface of the device-driver program between a first display screen in which a layout of setting items editable by a user is customizable and a second display screen different from the first display screen; arranging a setting item in a setting item display area of the first display screen, upon switching over to the first display screen, in accordance with a setting item status management table that stores data indicative of a sequence position of a setting item arranged in the setting item display area of the first display screen and data indicative of a display-enabled-or-display-disabled status of the setting item; and arranging a list of setting items in a list display area of the second display screen, upon switching over to the second display screen, in accordance with a list status management table that stores data indicative of sequence positions of setting items arranged in the list display area of the second display screen and data indicative of a display-enabled-or-display-disabled status of the setting items.

In another embodiment, an apparatus includes: a memory unit configured to store a device-driver program; and a computing unit configured to execute the device-driver program stored in the memory unit to control a peripheral device and further configured to cause a display device to display a user interface of the device-driver program, the device-driver program including: a switchover unit configured to switch display screens on the user interface of the device-driver program between a first display screen in which a layout of setting items editable by a user is customizable and a second display screen different from the first display screen; a setting item status management unit configured to store, in a setting item status management table, data indicative of a sequence position of a setting item arranged in a setting item display area of the first display screen and data indicative of a display-enabled-or-display-disabled status of the setting item; a first arranging unit configured to arrange the setting item in the setting item display area of the first display screen in accordance with the setting item status management table; a list status management unit configured to store, in a list status management table, data indicative of sequence positions of setting items arranged in a list display area of the second display screen and data indicative of a display-enabled-or-display-disabled status of the setting items; and a second arranging unit configured to arrange a list of the setting items in the list display area of the second display screen in accordance with the list status management table.

According to at least one embodiment of the invention, a device driver and a method of customizing the layout of a user interface are provided that can accommodate user needs for the layout of a device driver user interface in a flexible, easy, and swift manner.

### BRIEF DESCRIPTION OF THE DRAWINGS

Other objects and further features of embodiments will be apparent from the following detailed description when read in conjunction with the accompanying drawings, in which:
Figs. 1A and 1B are drawings showing system configurations according to an embodiment;
Fig. 2 is a drawing showing an example of the hardware configuration of a PC;
Fig. 3 is a drawing showing an example of the software configuration of a PC;
Fig. 4 is an illustrative drawing showing an example of the appearance of a printer driver UI;
Fig. 5 is an illustrative drawing showing an example of plates;
Fig. 6 is a drawing showing an example of the configuration of a plate-status management table;
Figs. 7A through 7G are illustrative drawings showing various patterns in which plates are arranged from top to bottom in an area;
Figs. 8A through 8C are illustrative drawings showing examples of the appearance of an area in which plates are arranged;
Fig. 9 is an illustrative drawing showing an example of updates being made to the plate-status management table in response to history of user operation;
Fig. 10 is an illustrative drawing showing an example of updates being made to the plate-status management table in response to changes made from the initial settings provided at the time of shipment from a factory;
Figs. 11A through 11D are illustrative drawings showing examples of plate-status management tables that can be switched from one to another at the time of use;
Fig. 12 is an illustrative drawing showing examples of plate-status management tables that can be switched from one to another by selecting a user customized mode, a history mode, or a change-from-initial-setting model;
Fig. 13 is a drawing showing another example of the software configuration of a PC;
Fig. 14 is an illustrative drawing showing an example of the detail setting window;
Fig. 15 is an illustrative drawing showing the hierarchical presentation of a setting list;
Fig. 16 is an illustrative drawing showing the related-art process of displaying a setting list on a printer driver UI;
Fig. 17 is a flowchart showing a related-art procedure of updating a setting list displayed on the printer driver UI inside a printer driver;
Fig. 18 is an illustrative drawing showing the process of displaying a setting list on a printer driver UI;
Fig. 19 is a flowchart showing a procedure of updating a setting list displayed on the printer driver UI inside a printer driver;
Fig. 20 is an illustrative drawing showing the process of displaying a setting list on a printer driver UI based on the history of user operations;
Fig. 21 is a flowchart showing a procedure of updating a setting list displayed on the printer driver UI inside a printer driver;
Fig. 22 is an illustrative drawing showing the process of displaying a setting list on a printer driver UI based on current settings different from the initial settings provided at the time of shipment from the factory;
Fig. 23 is a flowchart showing a procedure of updating a setting list displayed on the printer driver UI inside a printer driver; and
Fig. 24 is a table showing a variety of combinations between mode 1 and mode 2.

### DESCRIPTION OF THE PREFERRED EMBODIMENTS

In the following, embodiments for carrying out the present invention will be described by referring to the accompanying drawings. The embodiments will be directed to an example in which a printer driver is used as an example of a device driver. This is not a limiting example, and a device driver can be any type of device driver for which a user can edit setting items on its user interface. Further, the embodiments will be directed to an example in which a multi-function peripheral (hereinafter referred to as MFP) is used as an example of a peripheral device that is driven through an embedded device driver. This is not a limiting example, and the peripheral device can be any type of peripheral device.

### [First Embodiment]

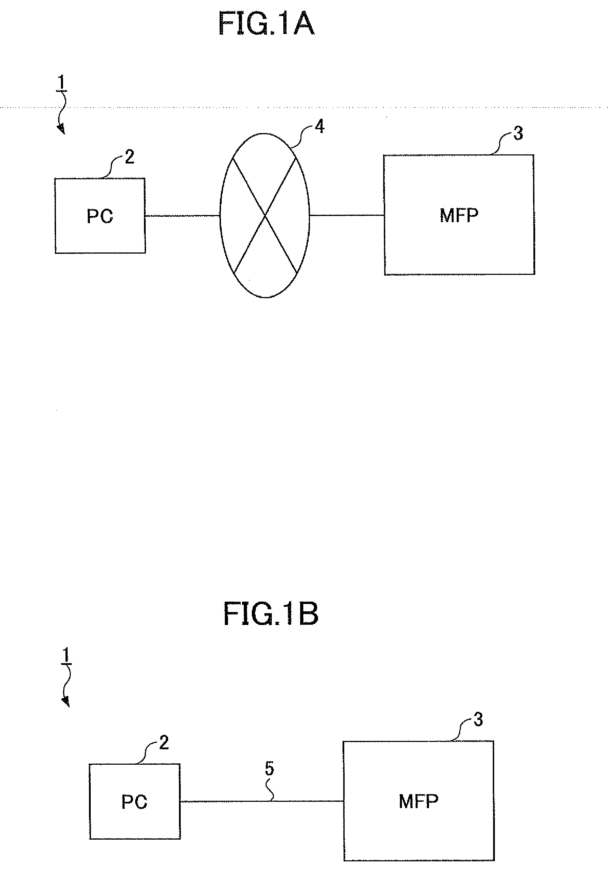

Figs. 1A and 1B are drawings showing system configurations according to the present embodiment. A system 1 may have a configuration as shown in Fig. 1A, in which a PC 2 and an MFP 3 operated by users are connected to each other via a network 4 such as a LAN to perform data transmission. Alternatively, the system 1 may have a configuration as shown in Fig. 1B, in which the PC 2 and the MFP 3 are connected to each other via a data transmission line 5 such as a USB to perform data transmission.

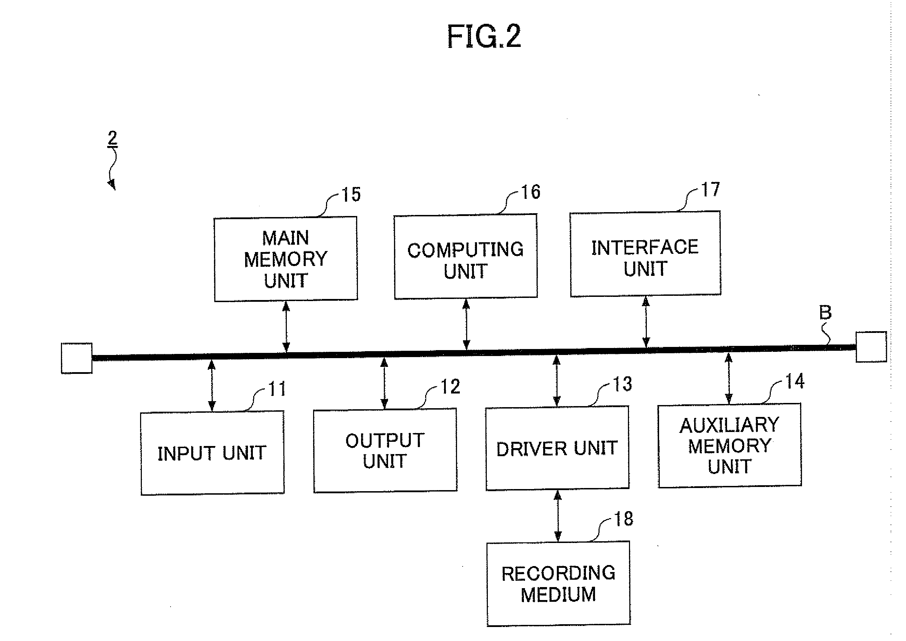

The PC 2 may have a configuration as shown in Fig. 2, for example. Fig. 2 is a drawing showing an example of the hardware configuration of a PC. The PC 2 shown in Fig. 2 includes an input unit 11, an output unit 12, a driver unit 13, an auxiliary memory unit 14, a main memory unit 15, a computing unit 16, and an interface unit 17, all of which are connected together via a bus B.

The input unit 11 includes a keyboard and mouse, for example, and serves to receive various input signals. The output unit 12 includes a display apparatus and the like, and serves to display various types of windows, data, and the like. The interface unit 17 includes a modem, a LAN card, a USB interface (I/F), and the like, and serves to establish a connection with the MFP 3 via the network 4 or the data transmission line 5.

A printer driver according to the present embodiment is software for use by the PC 2 to operate the MFP 3. The printer driver serves to assist an OS of the PC 2 to control the MFP 3. The printer driver is provided through the delivery of a recording medium 18 or through downloading via the network 4. The recording medium 18 having a printer driver recorded therein can be any type of recording medium. That is, it may be a recording medium for recording information by use of an optical, electrical, or magnetic means such as a CD-ROM, a flexible disk, or a magneto-optical disk, or may be a semiconductor memory for recording information by use of an electrical means such as a ROM or a flash memory.

Upon setting the recording medium 18 containing a printer driver to the driver unit 13, the printer driver is installed from the recording medium 18 to the auxiliary memory unit 14 through the driver unit 13. A printer driver that is downloaded through the network 4 is installed to the auxiliary memory unit 14 through the interface unit 17.

The auxiliary memory unit 14 stores an installed printer driver, and, also, stores various files and data. Upon power-on, the printer driver is read from the auxiliary memory unit 14 to be loaded to the main memory unit 15. The computing unit 16 performs various types of processing by use of the printer driver stored in the main memory unit 15 as will be described later.

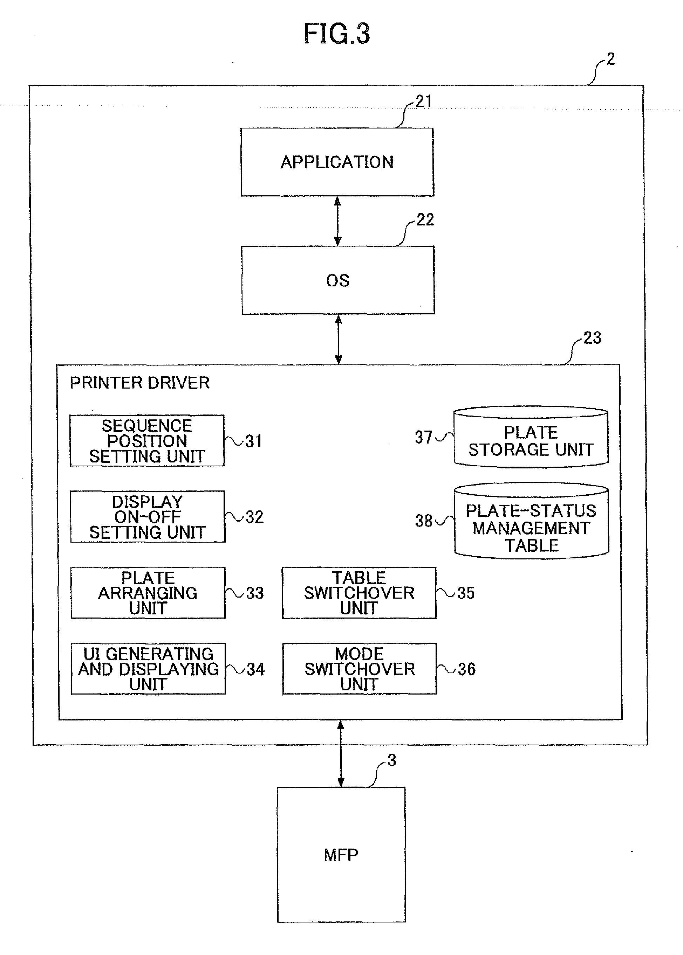

Fig. 3 is a drawing showing an example of the software configuration of a PC. The PC 2 shown in Fig. 3 includes an application 21, an OS 22, and a printer driver 23. Upon receiving a request regarding the MFP 3 from the application 21, the OS 22 controls the MFP 3 by use of the printer driver 23.

The printer driver 23 includes a sequence position setting unit 31, a display on-off setting unit 32, a plate arranging unit 33, a UI generating and displaying unit 34, a table switchover unit 35, a mode switchover unit 36, a plate storage unit 37, and a plate-status management table 38.

The configuration of the printer driver 23 shown in Fig. 3 includes only the portions relevant to the disclosures of the present embodiment. Further, the configuration of the printer driver 23 shown in Fig. 3 is only an example, and may be divided and provided as separate files.

The sequence position setting unit 31, the display on-off setting unit 32, the plate arranging unit 33, the UI generating and displaying unit 34, the table switchover unit 35, the mode switchover unit 36, the plate storage unit 37, and the plate-status management table 38, which constitute the printer driver 23, will be described later in detail.

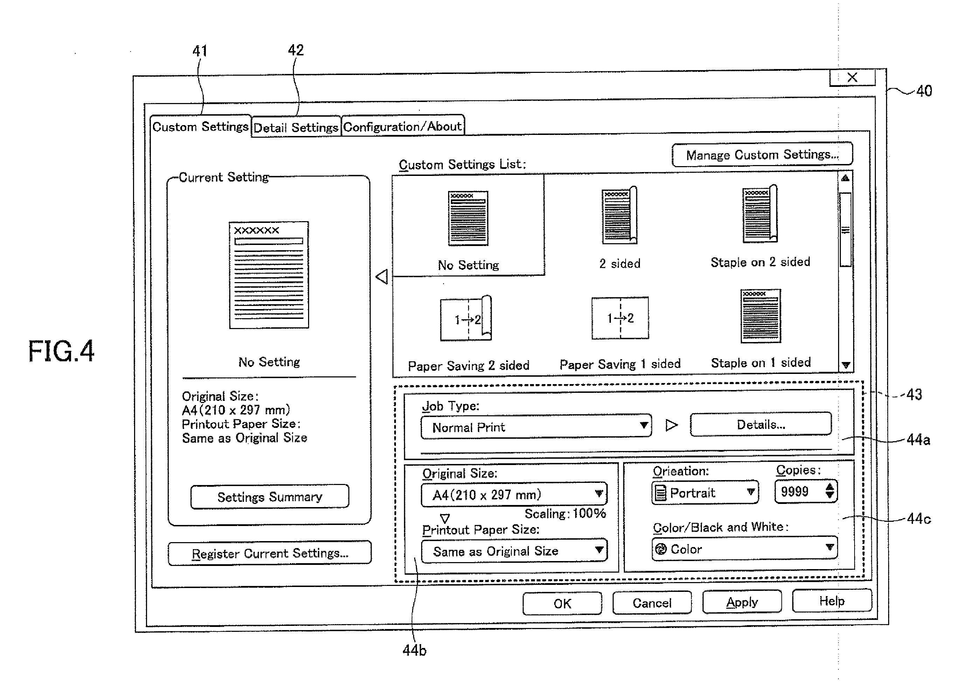

The printer driver 23 provides a printer driver UI 40 which is used by a user to make settings regarding the MFP 3. Fig. 4 is an illustrative drawing showing an example of the appearance of a printer driver UI. In the printer driver UI 40 shown in Fig. 4, a custom setting window (display screen) 41 and a detail setting window (display screen) 42 can be switched from one to the other by selecting a tab.

The detail setting window 42 includes all the setting items usable by the user, and receives user inputs regarding these setting items. It should be noted that the display layout of the detail setting window 42 cannot be customized.

The custom setting window 41 includes at least one or more of the setting items used by the user, and receives user inputs regarding such one or more of the setting items. It should be noted that the display layout of the custom setting window 41 can be customized. Specifically, the choice and arrangement of the setting items displayed in an area 43 indicated by a dotted-line frame can be customized in the custom setting window 41.

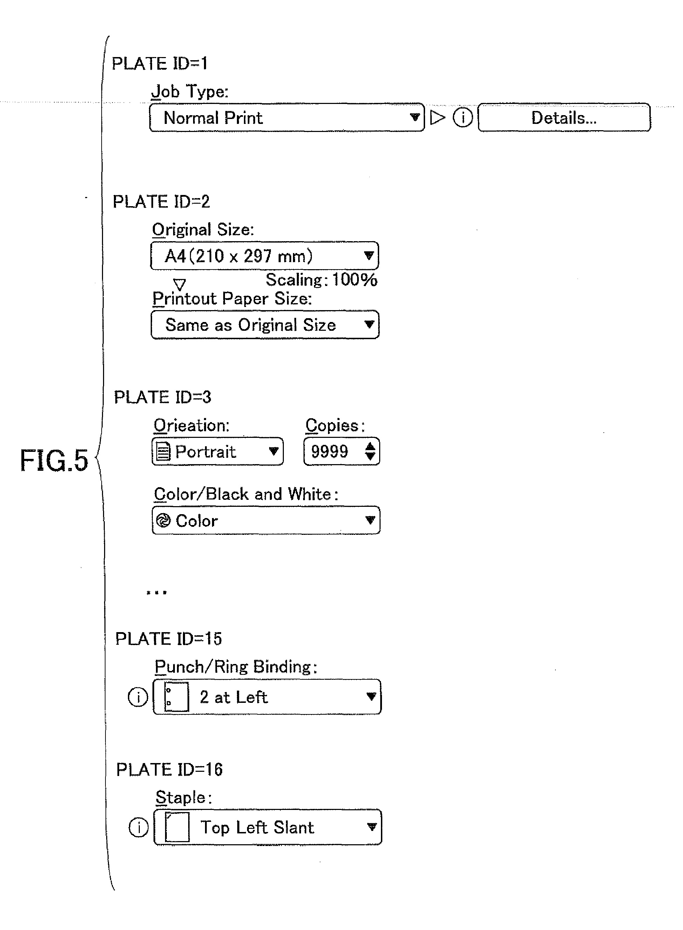

However, the custom setting window 41 does not allow a user to freely customize the choice and arrangement of the setting items displayed in the area 43 in detail. Instead, setting items are grouped into units (hereinafter referred to as plates) according to their functions to allow plates 44a through 44c to be customized. Fig. 5 is an illustrative drawing showing an example of plates. Plates in general will hereinafter be referred to by using reference numeral "44".

As shown in Fig. 5, each plate 44 is uniquely identified by its plate ID. Each plate 44 is already fixed at the time of delivery to customers. Each plate 44 is configured in such a manner that setting items belonging to a corresponding group as having related functions are displayed.

When plates 44 are used to customize the display layout of the custom setting window 41, each plate 44 has its plate ID and associated UI controls. Here, the UI controls refer to the character string "Staple:", a combobox for providing choices, and a balloon icon placed on the left-hand side of the combobox in the case of the plate 44 having the plate ID=16. The information regarding each plate 44 is stored in the plate storage unit 37.

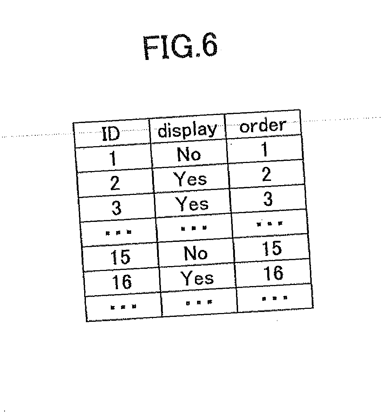

In order to use plates 44 to customize the display layout of the custom setting window 41, the printer driver 23 manages and controls the sequence position and display on-off status of each plate 44 by use of the plate-status management table 38 shown in Fig. 6.

Fig. 6 is a drawing showing an example of the configuration of a plate-status management table. The plate-status management table 38 stores a display on-off status (as shown in the "display" column) and a sequence position (as shown in the "order" column) separately for each plate ID. In the plate-status management table 38, the display on-off status "Yes" indicates a display-enabled status, and the display on-off status "No" indicates a display-disabled status. The sequence position in the plate-status management table 38 indicates a sequence number in the display sequence arranged in an ascending order.

The display on-off status in the plate-status management table 38 is set by the display on-off setting unit 32 as will be described later. The sequence position in the plate-status management table 38 is set by the sequence position setting unit 31 as will be described later. The display on-off setting unit 32 and the sequence position setting unit 31 update display on-off statuses and sequence numbers, respectively, in the plate-status management table 38 in response to instruction from a user.

The plate arranging unit 33 arranges plates 44 from top to bottom in the area 43 in an ascending order of the sequence numbers such that only the plates 44 for which the display on-off status indicates a display-enabled status in the plate-status management table 38 are displayed. If the display on-off status indicates a display-disabled status for a given plate 44 in the plate-status management table 38, this plate 44 is not displayed regardless of its sequence position. When sequence positions are changed in the plate-status management table 38, the sequence of the displayed plates 44 will be customized.

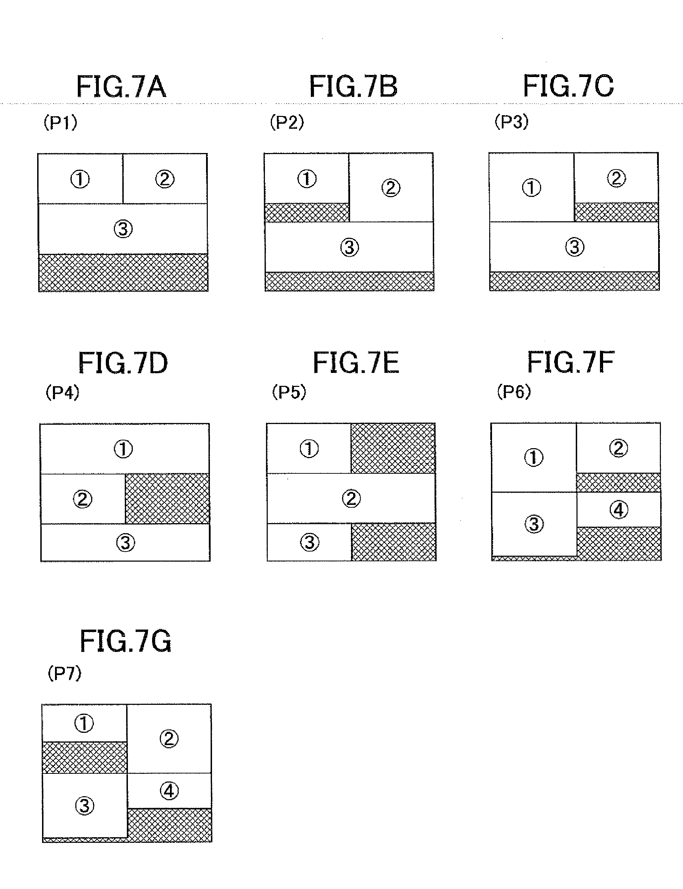

Figs. 7A through 7G are illustrative drawings showing various patterns in which plates are arranged from top to bottom in an area. Figs. 7A through 7G illustrate patterns P1 through P7. In Figs. 7A through 7G, hatched areas represent the background of the area 43. Encircled numbers indicate the sequence numbers of the displayed plates 44. As shown in Figs. 7A through 7G, each plate 44 has either a width equal to the width of the area 43 or a width equal to half the width of the area 43. Further, the height of each plate 44 is not restricted to any particular length. As was previously described, the display format of plates 44 is already fixed at the time of delivery to customers.

The plate arranging unit 33 uniquely determines the display sequence of the plates 44 based on the plate-status management table 38. The plate arranging unit 33 further determines the coordinates of each plate 44 in response to the width and height of each plate by taking into account the patterns shown in Figs. 7A through 7G.

Three plates 44 having respective sequence numbers 1, 2, and 3 may have respective widths that are half the width of the area 43, half the width of the area 43, and equal to the width of the area 43, respectively. In such a case, the plate arranging unit 33 determines the coordinates of the plates 44 by fitting these plates into one of the patterns P1 through P3 by taking into account the heights of the plates 44. In another example, three plates 44 having respective sequence numbers 1, 2, and 3 may have respective widths that are equal to the width of the area 43, half the width of the area 43, and equal to the width of the area 43, respectively. In such a case, the plate arranging unit 33 determines the coordinates of the plates 44 by fitting these plates into the pattern P4.

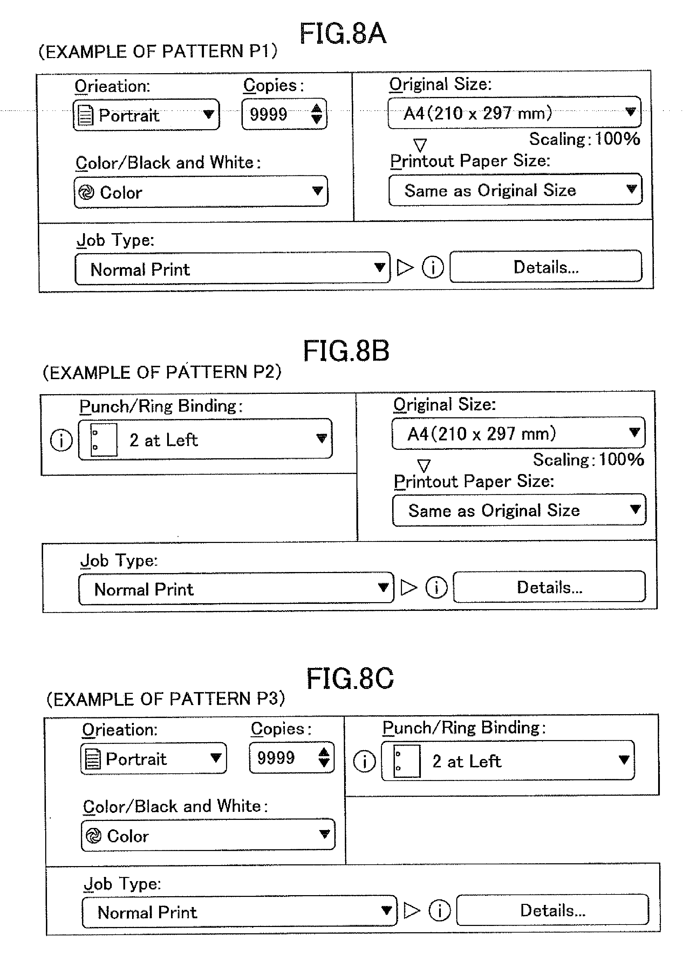

When the plates shown in Fig. 5 are arranged according to one of the patterns P1 through P3 shown in Figs. 7A through 7C, the plates 44 will appear in the area 43 as shown in Figs. 8A through 8C. Figs. 8A through 8C are illustrative drawings showing examples of the appearance of an area in which plates are arranged. Upon the coordinates of the plates 44 being fixed, the UI generating and displaying unit 34 generates the custom setting window 41 including the area 43 for display on the output unit 12 of the PC 2.

In this manner, the printer driver 23 of the present embodiment allows a user to freely customize the arrangements of the plates 44 by specifying the display on-off status and sequence number of each plate according to his/her preference. The printer driver 23 can thus satisfy user needs regarding the layout of the printer driver UI 40 in a flexible, easy, and swift manner.

### [Second Embodiment]

In the printer driver 23 of the first embodiment, the display on-off setting unit 32 and the sequence position setting unit 31 update display on-off statuses and sequence numbers, respectively, in the plate-status management table 38 in response to instruction from a user. In the second embodiment, the printer driver 23 automatically customizes, without user intervention, the plates 44 arranged in the area 43 of the custom setting window 41 in view of operation history.

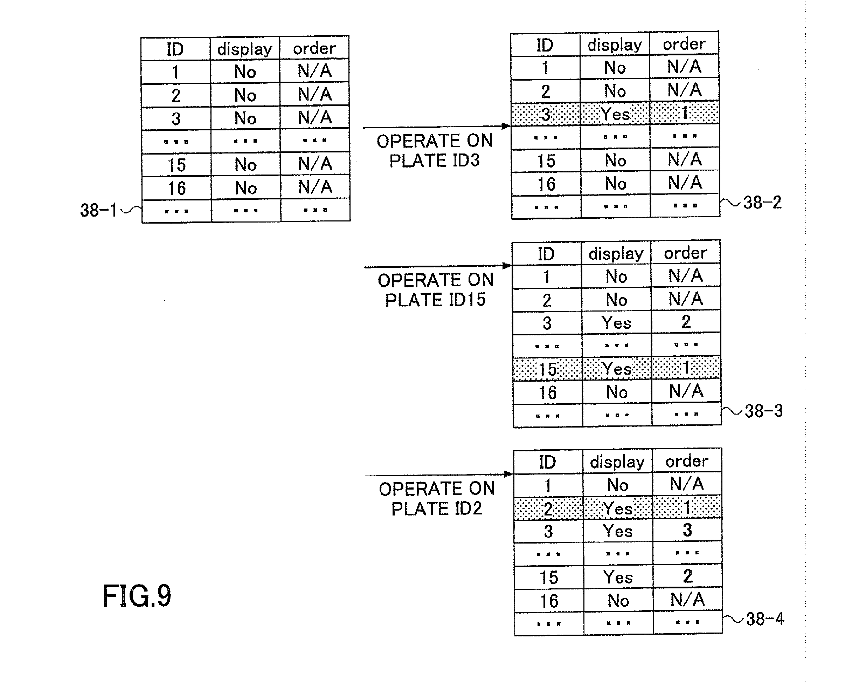

Fig. 9 is an illustrative drawing showing an example of updates being made to the plate-status management table in response to history of user operation. In Fig. 9, a plate-status management table 38-1 demonstrates the state of the table prior to the user operation for editing settings. In the plate-status management table 38-1, the display on-off status of each plate 44 is set to the display-disabled state. In the plate-status management table 38-1, further, no sequence position is set to the plates 44. Since the display on-off status of each plate 44 is set to the display-disabled state in the plate-status management table 38-1, the plate arranging unit 33 arranges no plate 44 in the area 43.

In response to a user operation regarding a setting item made through the detail setting window 42, the sequence position setting unit 31 and the display on-off setting unit 32 update the plate-status management table 38-1 to a plate-status management table 38-2. The plate-status management table 38-2 shows an example in which the setting item corresponding to the above-noted user operation belongs to the plate 44 that is uniquely identified by the plate ID=3.

Specifically, the plate-status management table 32 changes the display on-off status of the plate ID=3 to the display-enabled state, and the sequence position setting unit 31 changes the sequence position of the plate ID=3 to "1". The plate arranging unit 33 arranges a plate 44 from top to bottom in the area 43 according to one of the previously-described patterns wherein the display on-off status of this plate 44 indicates the display-enabled state in the plate-status management table 38-2.

After this, in response to a user operation regarding a setting item made through the detail setting window 42, the sequence position setting unit 31 and the display on-off setting unit 32 update the plate-status management table 38-2 to a plate-status management table 38-3. The plate-status management table 38-3 shows an example in which the setting item corresponding to the above-noted user operation belongs to the plate 44 that is uniquely identified by the plate ID=15.

Specifically, the plate-status management table 32 changes the display on-off status of the plate ID=15 to the display-enabled state. Further, the sequence position setting unit 31 changes the sequence position of the plate ID=15 to "1", and changes the sequence position of the plate ID=3 to "2". The plate arranging unit 33 arranges the plates 44 of ID=3 and ID=15 from a top of the area 43 in an ascending order of the sequence numbers, i.e., arranges the plate 44 of ID=15 first and the plate 44 of ID=3 second according to one of the previously-described patterns, wherein the display on-off status indicates the display-enabled status for each of these plates in the plate-status management table 38-3.

After this, in response to a user operation regarding a setting item made through the detail setting window 42, the sequence position setting unit 31 and the display on-off setting unit 32 update the plate-status management table 38-3 to a plate-status management table 38-4. The plate-status management table 38-4 shows an example in which the setting item corresponding to the above-noted user operation belongs to the plate 44 that is uniquely identified by the plate ID=2.

Specifically, the plate-status management table 32 changes the display on-off status of the plate ID=2 to the display-enabled state. Further, the sequence position setting unit 31 changes the sequence positions of the plates ID=2, 15, and 3 to "1", "2", and "3", respectively.

The plate arranging unit 33 arranges the plates 44 of ID=2, 3, and 15 from top of the area 43 in an ascending order of the sequence numbers, i.e., arranges the plate 44 of ID=2 first, the plate 44 of ID=15 second, and the plate 44 of ID=3 third by using one of the previously-described patterns, wherein the display on-off status indicates the display-enabled status for each of the plates ID=2, 3, and 15 in the plate-status management table 38-4.

In the printer driver 23 of the second embodiment, the contents of the plate-status management table 38 are updated as shown in Fig. 9 in response to user operations regarding setting items. Namely, the plate-status management table 38 is updated such that the display on-off status of the plate corresponding to an edited setting item is changed to the display-enabled state, and, also, the sequence positions are updated by changing each existing sequence number to a next-higher sequence number and by setting the sequence position of the last-edited plate to "1".

As described above, the printer driver 23 of the second embodiment automatically customizes, without user intervention, the plates 44 arranged in the area 43 of the custom setting window 41 in view of operation history. In the description of the second embodiment, a redundant explanation overlapping that of the first embodiment has been omitted as appropriate.

### [Third Embodiment]

In the printer driver 23 of the third embodiment, the initial settings of the printer driver 23 provided at the time of delivery to customers may differ from the current settings. In such a case, the printer driver 23 automatically customizes, without user intervention, the plates 44 arranged in the area 43 of the custom setting window 41, such that these different setting items are displayed in the area 43.

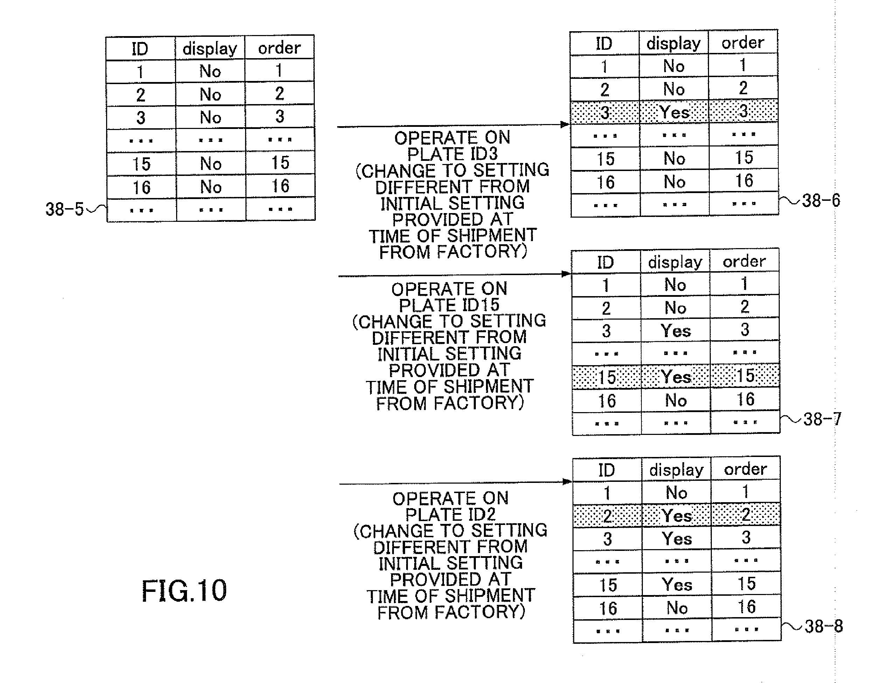

Fig. 10 is an illustrative drawing showing an example of updates being made to the plate-status management table in response to changes made from the initial settings provided at the time of delivery. In Fig. 10, a plate-status management table 38-5 demonstrates the state of the table prior to changes made to settings from the initial settings provided at the time of delivery to customers (or at the time of shipment from the factory). In the plate-status management table 38-5, the display on-off status of each plate 44 is set to the display-disabled state. In the plate-status management table 38-5, further, the plates 44 are provided with their initial sequence positions. Since the display on-off status of each plate 44 is set to the display-disabled state in the plate-status management table 38-5, the plate arranging unit 33 does not arrange any of the plates 44 in the area 43.

When a setting item is changed through the detail setting window 42 from its initial setting provided at the time of shipment, the display on-off setting unit 32 updates the plate-status management table 38-5 to a plate-status management table 38-6. The plate-status management table 38-6 shows an example in which the setting item changed from its initial setting provided at the time of shipment belongs to the plate 44 that is uniquely identified by the plate TD=3.

Specifically, the plate-status management table 32 changes the display on-off status of the plate ID=3 to the display-enabled state. The plate arranging unit 33 arranges a plate 44 from top of the area 43 according to one of the previously-described patterns wherein the display on-off status of this plate 44 indicates the display-enabled state in the plate-status management table 38-6.

When a setting item is further changed through the detail setting window 42 from its initial setting provided at the time of shipment, the display on-off setting unit 32 updates the plate-status management table 38-6 to a plate-status management table 38-7. The plate-status management table 38-7 shows an example in which the setting item changed from its initial setting provided at the time of shipment belongs to the plate 44 that is uniquely identified by the plate ID=15.

Specifically, the plate-status management table 32 changes the display on-off status of the plate ID=15 to the display-enabled state. The plate arranging unit 33 arranges the plates 44 of ID=3 and ID=15 from top of the area 43 in an ascending order of the sequence numbers, i.e., arranges the plate 44 of ID=3 first and the plate 44 of TD=15 second according to one of the previously-described patterns, wherein the display on-off status indicates the display-enabled status for each of these plates in the plate-status management table 38-7.

When a setting item is further changed through the detail setting window 42 from its initial setting provided at the time of shipment, the display on-off setting unit 32 updates the plate-status management table 38-7 to a plate-status management table 38-8. The plate-status management table 38-8 shows an example in which the setting item changed from its initial setting provided at the time of shipment belongs to the plate 44 that is uniquely identified by the plate ID=2.

Specifically, the plate-status management table 32 changes the display on-off status of the plate ID=2 to the display-enabled state. The plate arranging unit 33 arranges the plates 44 of TD=2, 3, and 15 from the top of the area 43 in an ascending order of the sequence numbers, i.e., arranges the plate 44 of ID=2 first, the plate 44 of ID=3 second, and the plate 44 of ID=15 third by using one of the previously-described patterns, wherein the display on-off status indicates the display-enabled status for each of the plates ID=2, 3, and 15 in the plate-status management table 38-8. In the third embodiment, the printer driver 23 does not update the sequence positions in the plate-status management table 38, and uses the sequence positions as set forth in the plate-status management table 38-5.

In the printer driver 23 of the third embodiment, the contents of the plate-status management table 38 are updated as shown in Fig. 10 in response to changes that are made to setting items through the detail setting window 42 from the initial settings provided at the time of shipment from the factory. Namely, the plate-status management table 38 is updated such that the display on-off statuses of plates are changed to the display-enabled state with respect to the setting items changed from their initial settings provided at the time of shipment from the factory.

When the initial settings of the printer driver 23 provided at the time of shipment from the factory differ from the current settings, the printer driver 23 of the third embodiment automatically customizes, without user intervention, the plates 44 arranged in the area 43 of the custom setting window 41, such that those setting items different from the initial settings provided at the time of shipment from the factory are displayed in the area 43. In the description of the third embodiment, a redundant explanation overlapping that of the first or second embodiment has been omitted as appropriate.

### [Fourth Embodiment]

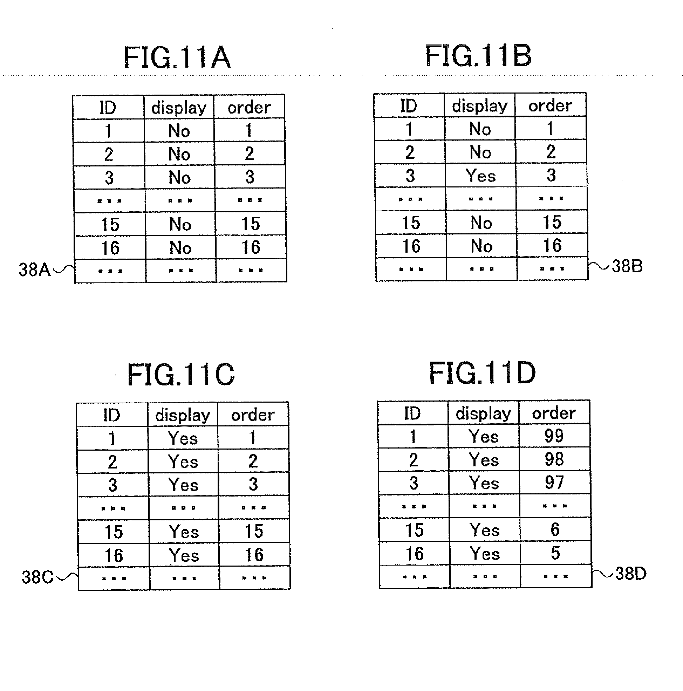

The printer driver 23 of the fourth embodiment stores a plurality of plate-status management tables 38 each serving as a single setting, and switches between the plate-status management tables 38 Figs. 11A through 11D are illustrative drawings showing examples of plate-status management tables that can be switched from one to another at the time of use.

Figs. 11A through 11D show four plate-status management tables 38A through 38D. Switching between the four plate-status management tables 38A through 38D is performed by use of the table switchover unit 35.

When the plate-status management table 38A is used, no plate 44 is arranged in the area 43 of the custom setting window 41. When the plate-status management table 38B is used, the plate 44 corresponding to the plate ID=3 is arranged in the area 43 of the custom setting window 41. When the plate-status management table 38C is used, all the plates 44 are arranged in the area 43 of the custom setting window 41. When the plate-status management table 38D is used, all the plates 44 are arranged in the area 43 of the custom setting window 41 in an order reverse to the order of arrangement that appears at the time of use of the plate-status management table 38C.

In response to a user request, further, the table switchover unit 35 can additionally store the contents of the plate-status management table 38 as existing at a certain point in time as a plate-status management table 38E or 38F, for example. In response to a user request, moreover, the table switchover unit 35 can allow an additionally stored plate-status management table 38E or 38F to be used by switching over to such a table.

As described above, the printer driver 23 of the fourth embodiment can store the contents of a plate-status management table 38 as existing at a certain point in time, and allows a user to use one of the stored plate-status management tables 38 by switching over to this table according to user preference. In the description of the fourth embodiment, a redundant explanation overlapping that of the first through third embodiments has been omitted as appropriate.

### [Fifth Embodiment]

In the fifth embodiment, the printer driver 23 can switch between a user customized mode, a history mode, and a change-from-initial-setting mode to use a desired customized mode regarding the plates 44 arranged in the area 43 of the custom setting window 41 in view of the first through third embodiments.

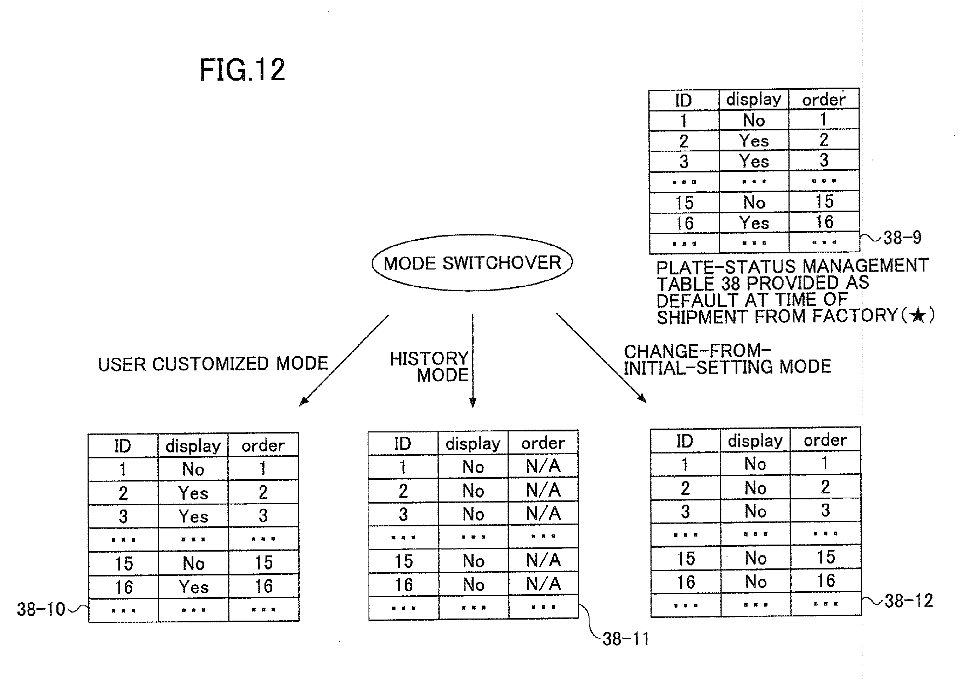

Fig. 12 is an illustrative drawing showing examples of plate-status management tables that can be switched from one to another by selecting a user customized mode, a history mode, or a change-from-initial-setting mode. A plate-status management table 38-10 is provided for use in the user customized mode. A plate-status management table 38-11 is provided for use in the history mode. A plate-status management table 38-12 is provided for use in the change-from-initial-setting mode. A plate-status management table 38-9 is a default table provided at the time of shipment from the factory.

Switching between the plate-status management tables 38-10 through 38-12 is performed by use of the mode switchover unit 36. The user customized mode starts by using a copy of the plate-status management table 38-9. The history mode starts by using a copy of the plate-status management table 38-9 in which the display on-off status of all the plates 44 is set to the display-disabled state and the sequence position of all the plates 44 is set to "N/A". The change-from-initial-setting mode starts by using a copy of the plate-status management table 38-9 in which the display on-off status of all the plates 44 is set to the display-disabled state.

Each time a user switches between the user customized mode, the history mode, and the change-from-initial-setting mode by use of the mode switchover unit 36, the plate-status management table 38 is reset, so that the plates 44 arranged in the area 43 of the custom setting window 41 are updated to reflect the contents of one of the plate-status management tables 38-10 through 38-12 corresponding to the selected one of the user customized mode, the history mode, and the change-from-initial-setting mode.

### [Sixth Embodiment]

The printer driver 23 according to the first through fifth embodiments allows customization to be made to the choices and arrangement of setting items displayed in the area 43 of the custom setting window 41. A printer driver 23a according to the present and subsequent embodiments allows customization to be made to a setting list displayed in an area 100 of the detail setting window 42. The configuration of the system 1 used in the following embodiments are the same as that shown in Fig. 1. The hardware configuration of the PC 2 is the same as that shown in Fig. 2.

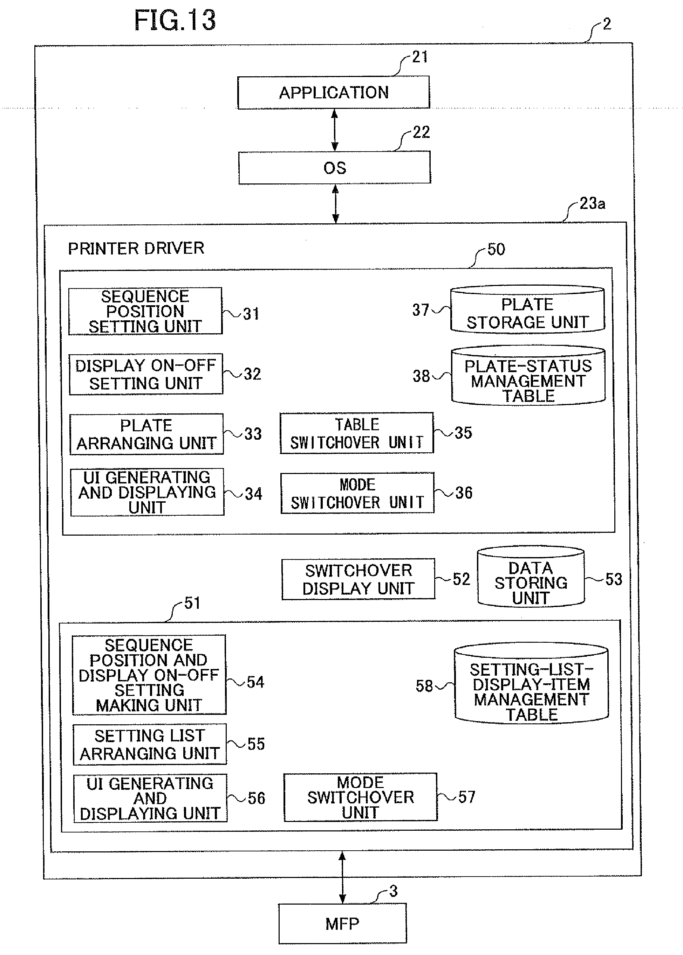

Fig. 13 is a drawing showing another example of the software configuration of a PC. The PC 2 shown in Fig. 13 includes an application 21, an OS 22, and a printer driver 23a. Upon receiving a request regarding the MFP 3 from the application 21, the OS 22 controls the MFP 3 by use of the printer driver 23a.

The printer driver 23a includes a custom setting window display controlling unit 50, a detail setting window display controlling unit 51, a switchover display unit 52, and a data storing unit 53.

Like the printer driver 23, the custom setting window display controlling unit 50 includes a sequence position setting unit 31, a display on-off setting unit 32, a plate arranging unit 33, a UI generating and displaying unit 34, a table switchover unit 35, a mode switchover unit 36, a plate storage unit 37, and a plate-status management table 38.

The detail setting window display controlling unit 51 includes a sequence position and display on-off setting making unit 54, a setting list arranging unit 55, a UI generating and displaying unit 56, a mode switchover unit 57, and a setting-list-display-item management table 58. The configuration of the printer driver 23a shown in Fig. 13 includes only the portions relevant to the disclosures of the present embodiment. Further, the configuration of the printer driver 23a shown in Fig. 13 is only an example, and may be divided and provided as separate files. The custom setting window display controlling unit 50, the detail setting window display controlling unit 51, the switchover display unit 52, and the data storing unit 53 of the printer driver 23a will be described later in detail.

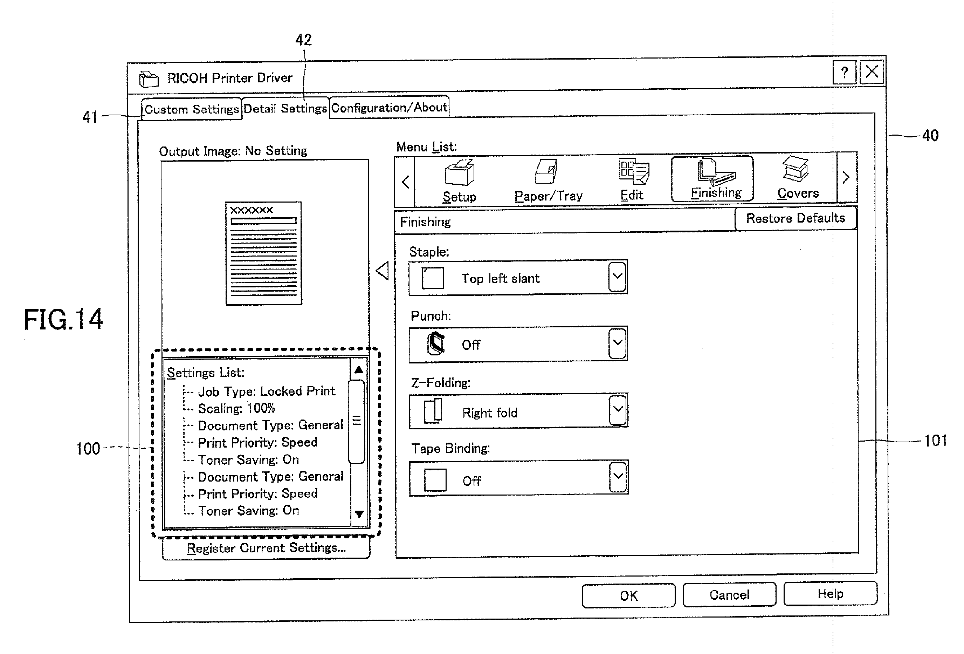

The printer driver 23a provides a printer driver UI 40 as shown in Fig. 4, which is used by a user to make settings regarding the MFP 3. On the printer driver UI 40 shown in Fig. 4, the detail setting window 42 shown in Fig. 14 can be displayed by selecting the corresponding tab. Switching between the custom setting window 41 and the detail setting window 42 is performed by the switchover display unit 52.

Fig. 14 is an illustrative drawing showing an example of the detail setting window. The detail setting window 42 shown in Fig. 14 includes the area 100 displaying a setting list that lists setting items, and further includes an area 101 that includes all setting items that can be edited by a user. The area 100 displays a setting list that shows the name and setting value of each setting item.

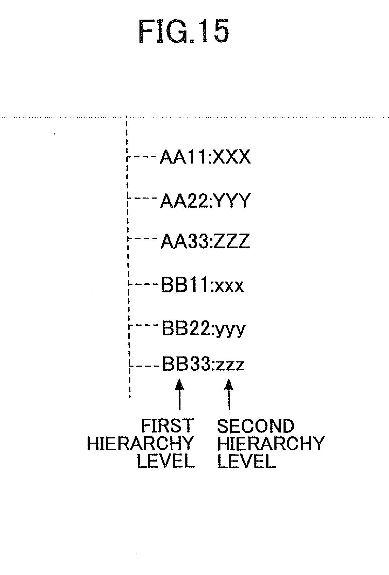

The name and setting value of each setting item shown in the area 100 are displayed by referring to its hierarchical organization as shown in Fig. 15. Fig. 15 is an illustrative drawing showing the hierarchical presentation of a setting list. In Fig. 15, the first hierarchy level shows the name of each setting item, and the second hierarchy level shows the setting value of each setting item. The name of a given setting item may be "Duplex Printing", and its setting value may be "On", for example. In such a case, the name "Duplex Printing" is displayed at the first hierarchy level for this given setting item, and the setting value "On" is displayed at the second hierarchy level.

All the UI controls for accepting user operation with respect to the respective setting items are displayed in the area 101 by using predetermined menu lists (e.g., Setup, Paper/Tray, and so on). It should be noted that the display layout of the area 101 cannot be customized. As the number of UI controls increases, the time and effort required for a user to find a UI control for a desired setting item will also increase even when the menu lists are used. When a setting item is to be edited in the area 101, for example, the user needs to select a menu list first, and then looks for a UI control for a desired setting item, followed by editing the desired setting item by use of the UI control that has been found.

In consideration of this, the printer driver UI 40 includes the area 100 for displaying the setting list. The use of the setting list displayed in the area 100 makes it possible for the user to review the current setting values of the setting items at once without looking for a UI control corresponding to a setting item in the area 101. It should be noted that the display layout of the setting list displayed in the area 100 can be customized with respect to the sequence of the setting items, the display on-off status of the setting items, etc.

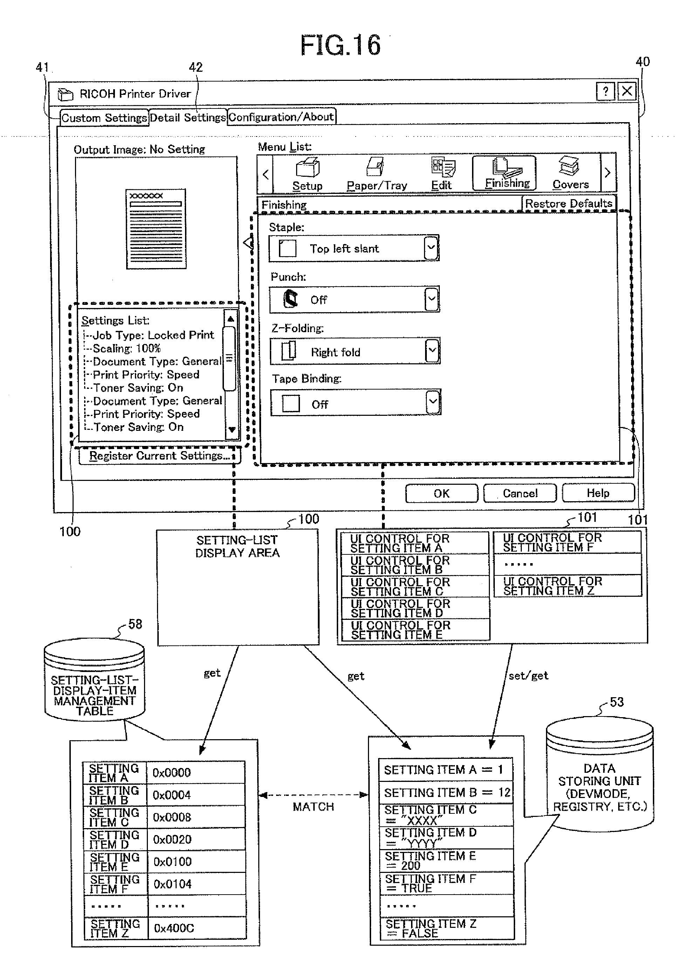

In order to facilitate the understanding of the present embodiment, a description will be given first with regard to the related-art processing that displays a setting list on the printer driver UI 40. Fig. 16 is an illustrative drawing showing the related-art process of displaying a setting list on a printer driver UI. The setting-list-display-item management table 58 includes information regarding the data storing unit 53 (e.g., an offset address from the start of the data storing unit 53) that indicates the location where an actual setting value is stored with respect to each setting item (e.g., setting items A through Z).

The data storing unit 53 is a nonvolatile memory area such as Registry or DEVMODE (i.e., Device Mode) of a printer driver of the Windows (registered trademark), for example.

The UI control of a setting item displayed in the area 101 of the printer driver UI 40 has information about the position at which its setting value is stored in the data storing unit 53. Upon being operated by a user, the printer driver UI 40 reads and writes its setting value.

On the other hand, the setting list arranging unit 55 that arranges a setting list in the area 100 of the printer driver UI 40 does not have information about (i.e., does not know) the position at which the setting value of each setting item is stored in the data storing unit 53. The setting list arranging unit 55 acquires information about the position at which an actual setting value is stored in the data storing unit 53 by retrieving this information from the setting-list-display-item management table 58 that is stored and managed in the nonvolatile memory area, followed by acquiring the setting value from the data storing unit 53.

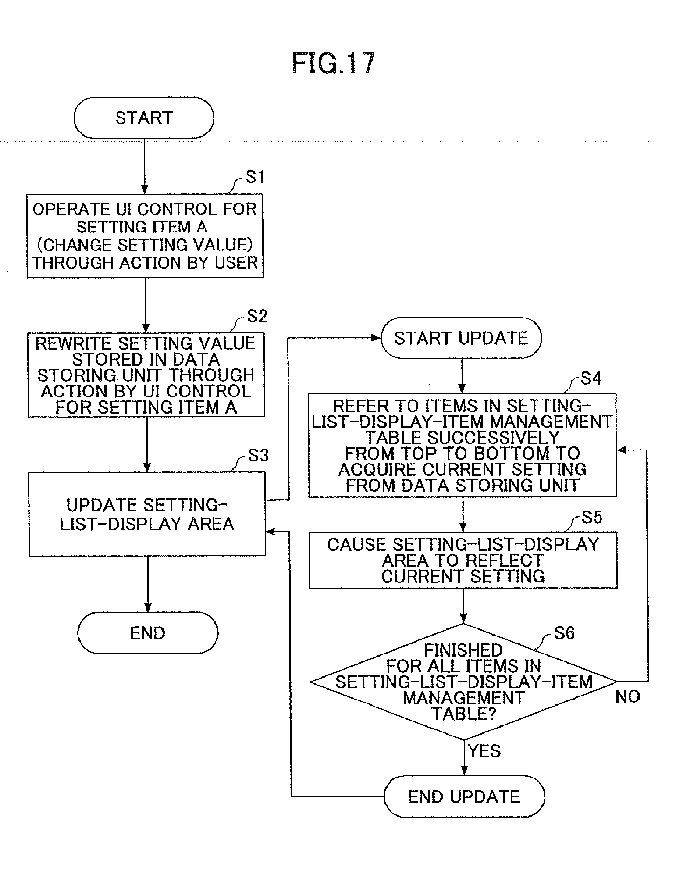

Fig. 17 is a flowchart showing a related-art procedure of updating a setting list displayed on the printer driver UI inside a printer driver. The flowchart shown in Fig. 17 is directed to an example in which the UI control corresponding to the setting item A displayed in the area 101 of Fig. 16 is operated (i.e., to change its setting value).

In step S1, the UI control corresponding to the setting A is operated by a user to accept an action that changes its setting value. In step S2, the UI control corresponding to the setting A rewrites its setting value stored in the data storing unit 53.

In step S3, the setting list arranging unit 55 starts updating the setting list displayed in the area 100. In step S4, the setting list arranging unit 55 refers to setting items in the setting-list-display-item management table 58 successively from top to bottom to acquire information about the position at which the actual setting value is stored in the data storing unit 53, followed by acquiring the setting value from the data storing unit 53.

In step S5, the setting list arranging unit 55 causes the setting list shown in the area 100 to reflect the setting value acquired in step S4. The setting list arranging unit 55 finishes updating the setting list displayed in the area 100 when the processes in steps S4 and S5 are performed with respect to all the setting items stored in the setting-list-display-item management table 58.

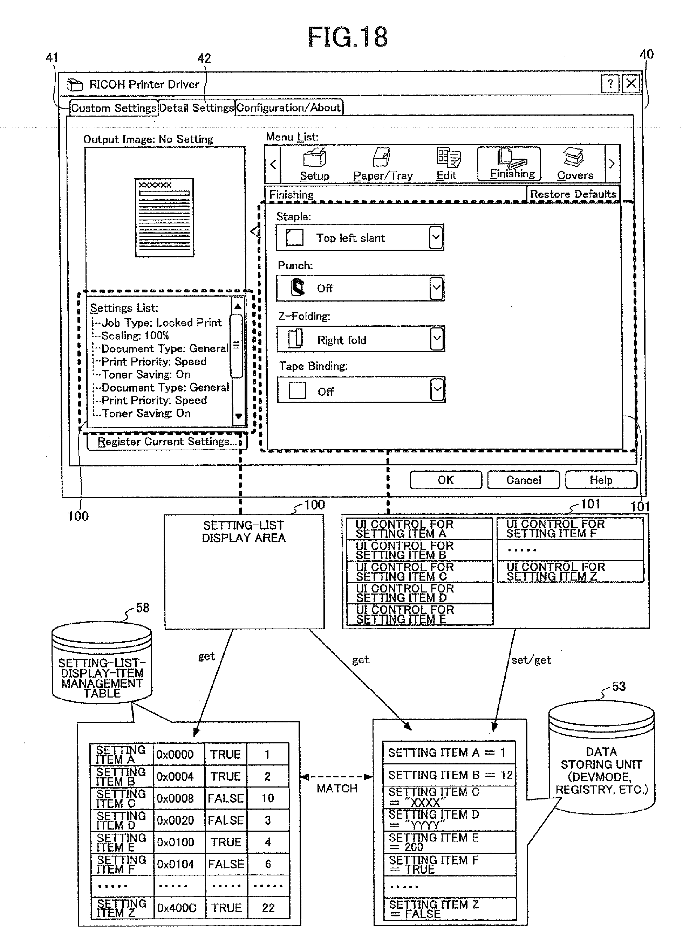

Fig. 18 is an illustrative drawing showing the process of displaying a setting list on a printer driver UI. The illustrative drawing of Fig. 18 differs from the illustrative drawing of Fig. 16 in the contents of the setting-list-display-item management table 58. The setting-list-display-item management table 58 shown in Fig. 18 has additional entries with respect to each of the setting items (i.e., each of the settings A through Z) included in the setting-list-display-item management table 58 shown in Fig. 16. These entries include a flag indicative of whether a corresponding setting item is to be displayed in the setting list and a value indicative of a sequence number of a corresponding setting item displayed in the setting list.

In the illustrative drawing shown in Fig. 18, the flag indicative of whether a corresponding setting item is to be displayed in the setting list has a Boolean value that assumes either the value "TRUE" indicating a display-enabled status or the value "FALSE" indicating a display-disabled status. Further, in the illustrative drawing shown in Fig. 18, the sequence number of a corresponding setting item that indicates a display position in the sequence of setting items of the setting list assumes a value that is given in an ascending order from top to bottom in the setting list.

In the illustrative drawing shown in Fig. 18, thus, the setting list is displayed such that the setting items having the "TRUE" value for the flag indicative of whether a corresponding setting item is to be displayed in the setting list are displayed from top to bottom in the setting list in the ascending order of the sequence numbers indicative of display positions in the sequence of setting items of the setting list.

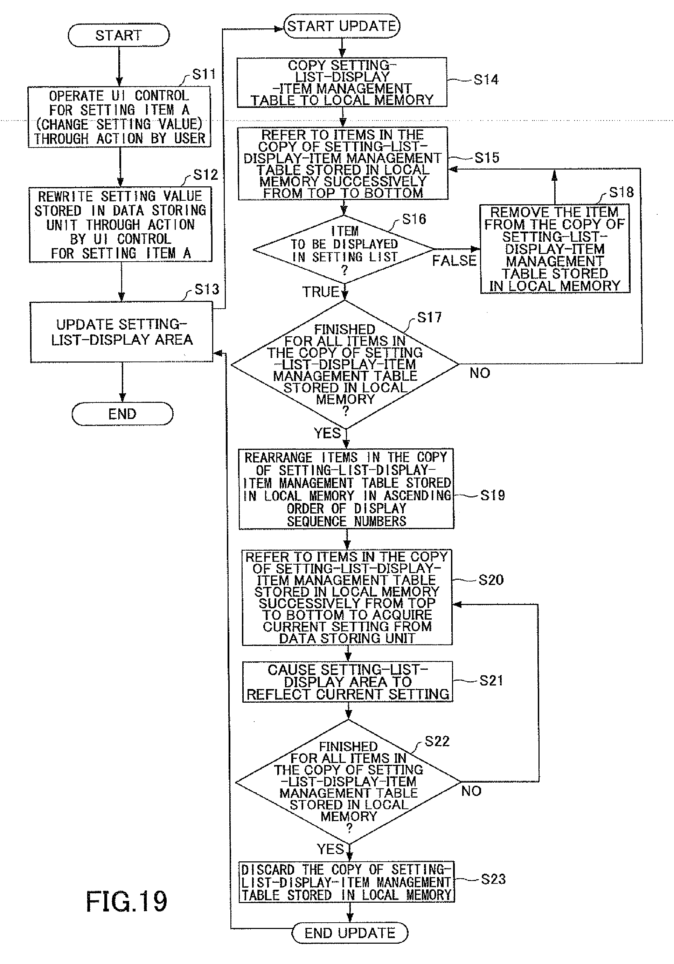

Fig. 19 is a flowchart showing a procedure of updating a setting list displayed on the printer driver UI inside a printer driver. The flowchart shown in Fig. 19 is directed to an example in which the UI control corresponding to the setting item A displayed in the area 101 of Fig. 18 is operated (i.e., to change its setting value).

The processes of steps S11 through S13 are identical to these of the steps S1 through S3 shown in the flowchart of Fig. 17, respectively. In step S14, the setting list arranging unit 55 copies all the contents of the setting-list-display-item management table 58 to a local memory. In steps S15 through S18, the setting list arranging unit 55 removes the records of setting items from the copy of the setting-list-display-item management table 58 stored in the local memory if the setting items have the value "FALSE" for the flag indicative of whether a corresponding setting item is to be displayed in the setting list.

In step S19, the setting list arranging unit 55 rearranges the setting items remaining in the copy of the setting-list-display-item management table 58 stored in the local memory in the ascending order of sequence numbers indicative of display positions in the sequence of setting items of the setting list. In step S20, the setting list arranging unit 55 refers to the rearranged setting items in the copy of the setting-list-display-item management table 58 stored in the local memory successively from top to bottom to acquire information about the position at which the actual setting value is stored in the data storing unit 53, followed by acquiring the setting value from the data storing unit 53.

In step S21, the setting list arranging unit 55 causes the setting list shown in the area 100 to reflect the setting value acquired in step S20. When the processes in steps S20 and S21 are performed with respect to all the rearranged setting items of the setting-list-display-item management table 58 stored in the local memory, the setting list arranging unit 55 proceeds to steps S23 to discard the setting-list-display-item management table 58 stored in the local memory, and finishes updating the setting list displayed in the area 100.

Upon the update of the setting list displayed in the area 100, the UI generating and displaying unit 56 generates the detail setting window 42 in which the setting list displayed in the area 100 is updated, and displays the detail setting window 42 on the output unit 12 of the PC 2.

In this manner, the printer driver 23a manages and controls the choice and arrangement of setting items displayed in the setting list based on the flags and sequence numbers specified in the setting-list-display-item management table 58, wherein the flag indicates whether a corresponding setting item is to be displayed in the setting list, and the sequence number indicates a display position in the sequence of setting items of the setting list.

The flag indicative of whether a corresponding setting item is to be displayed in the setting list and the sequence number indicative of a display position in the sequence of setting items of the setting list are set in the setting-list-display-item management table 58 by the sequence position and display on-off setting making unit 54. Needless to say, some other tool (application) specifically provided for this purpose may alternatively be used to set the flag indicative of whether a corresponding setting item is to be displayed in the setting list and the sequence number indicative of a display position in the sequence of setting items of the setting list in the setting-list-display-item management table 58.

The sequence position and display on-off setting making unit 54 may provide a dedicated dialog box or window in the printer driver UI 40, for example, thereby allowing a user to make settings in the setting-list-display-item management table 58 with respect to the flag indicative of whether a corresponding setting item is to be displayed in the setting list and the sequence number indicative of a display position in the sequence of setting items of the setting list.

In this manner, the printer driver 23a allows a user to freely customize the setting list displayed in the area 100 according to user preference by setting in the setting-list-display-item management table 58 the flag indicative of whether a corresponding setting item is to be displayed in the setting list and the sequence number indicative of a display position in the sequence of setting items of the setting list. Accordingly, the printer driver 23a can accommodate user needs regarding the layout of the printer driver UI 40 in a flexible, easy, and swift manner.

### [Seventh Embodiment]

The printer driver 23a of the sixth embodiment sets, in the setting-list-display-item management table 58 according to user instruction, the flag indicative of whether a corresponding setting item is to be displayed in the setting list and the sequence number indicative of a display position in the sequence of setting items of the setting list. In the seventh embodiment, the printer driver 23a automatically customizes, without user intervention, the setting list displayed in the area 100 of the detail setting window 42 in view of an operation history.

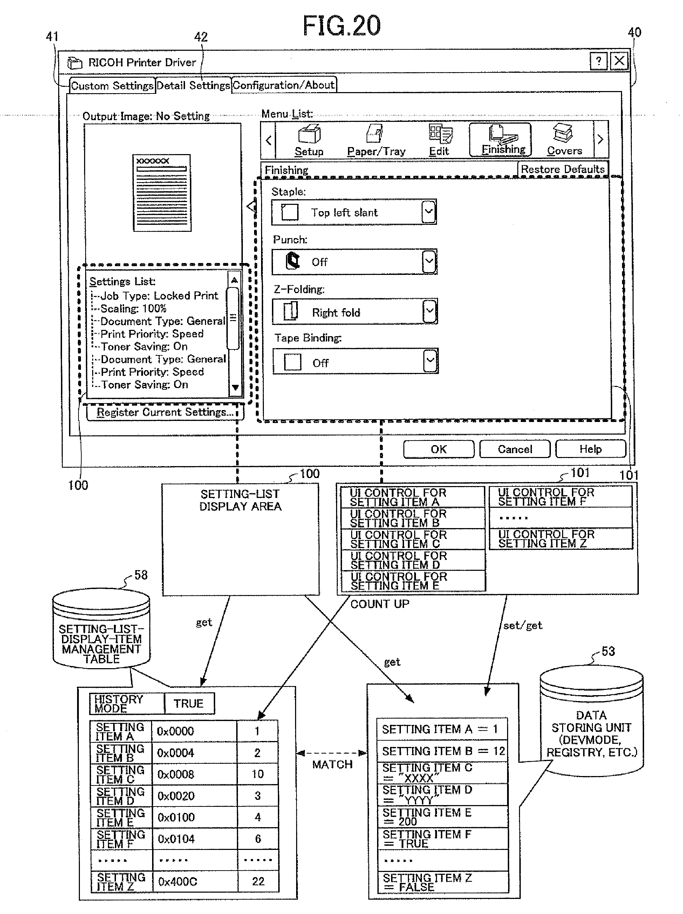

Fig. 20 is an illustrative drawing showing the process of displaying a setting list on a printer driver UI based on the history of user operations. The illustrative drawing of Fig. 20 differs from the illustrative drawing of Fig. 16 in the contents of the setting-list-display-item management table 58.

The setting-list-display-item management table 58 shown in Fig. 20 has an additional entry with respect to each of the setting items (i.e., each of the settings A through Z) included in the setting-list-display-item management table 58 shown in Fig. 16. This entry is a counter value that indicates the history of operations performed on a corresponding UI control. Further, the setting-list-display-item management table 58 shown in Fig. 20 has a flag that is used to switch the setting-list-display mode from an entire-list-display mode allowing no customization of the setting list to a history mode in which the setting list of the printer driver UI 40 is customized according to the history of user operations. The counter value indicative of the history of operations performed on a corresponding UI control in the setting-list-display-item management table 58 is incremented by one each time a user operation is performed on a corresponding setting item.

In the illustrative drawing shown in Fig. 20, the flag indicative of the setting-list-display mode has a Boolean value that assumes either the value "TRUE" indicating the history mode or the value "FALSE indicating the entire-list-display mode. In the illustrative drawing shown in Fig. 20, the sequence positions of setting items displayed in the setting list correspond to a descending order of counter values indicative of user operations performed on respective UI controls.

Accordingly, in the illustrative drawing shown in Fig. 20, the setting items are displayed from top to bottom in the setting list in the descending order of counter values indicative of user operations performed on respective UI controls.

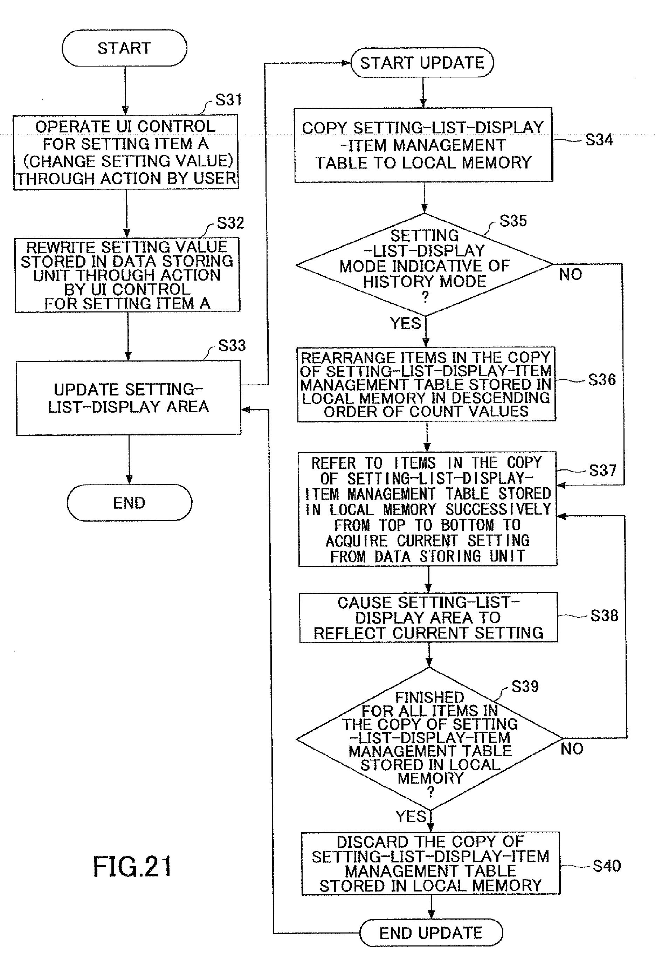

Fig. 21 is a flowchart showing a procedure of updating a setting list displayed on the printer driver UI inside a printer driver. The flowchart shown in Fig. 21 is directed to an example in which the UI control corresponding to the setting item A displayed in the area 101 of Fig. 20 is operated (i.e., to change its setting value).

The processes of steps S31 through S33 are identical to these of the steps S1 through S3 shown in the flowchart of Fig. 17, respectively. In step S34, the setting list arranging unit 55 copies all the contents of the setting-list-display-item management table 58 to a local memory. In step S35, the setting list arranging unit 55 refers to the flag indicative of the setting-list-display mode in the copy of the setting-list-display-item management table 58 stored in the local memory to determine whether the setting-list-display mode is the history mode.

Upon finding that the setting-list-display mode is the history mode, the setting list arranging unit 55 proceeds to step S36, in which the setting list arranging unit 55 rearranges the setting items in the copy of the setting-list-display-item management table 58 stored in the local memory in the descending order of counter values indicative of operations performed on respective UI controls. After this, the procedure proceeds to step S37. Upon finding that the setting-list-display mode is the entire-list-display mode, the setting list arranging unit 55 proceeds to step S37 without rearranging the setting items in the copy of the setting-list-display-item management table 58 stored in the local memory.

In step S37, the setting list arranging unit 55 refers to the setting items in the setting-list-display-item management table 58 stored in the local memory successively from top to bottom to acquire information about the position at which the actual setting value is stored in the data storing unit 53, followed by acquiring the setting value from the data storing unit 53.

In step S38, the setting list arranging unit 55 causes the setting list shown in the area 100 to reflect the setting value acquired in step S37. When the processes in steps S37 and S38 are performed with respect to all the setting items of the setting-list-display-item management table 58 stored in the local memory, the setting list arranging unit 55 proceeds to steps S40 to discard the setting-list-display-item management table 58 stored in the local memory, and finishes updating the setting list displayed in the area 100.

Upon the update of the setting list displayed in the area 100, the UI generating and displaying unit 56 generates the detail setting window 42 in which the setting list displayed in the area 100 is updated, and displays the detail setting window 42 on the output unit 12 of the PC 2.

In this manner, the printer driver 23a manages and controls the arrangement of setting items displayed in the setting list according to the counter values indicative of the history of operations performed on respective UI controls as set forth in the setting-list-display-item management table 58. It should be noted that the flag indicative of the setting-list-display mode in the setting-list-display-item management table 58 is set by the mode switchover unit 57. Needless to say, another tool (application) specifically provided for this purpose may alternatively be used to set the flag indicative of the setting-list-display mode in the setting-list-display-item management table 58.

In the present embodiment as described above, the printer driver 23a automatically customizes, without user intervention, the setting list displayed in the area 100 of the detail setting window 42 in view of operation history.

### [Eighth Embodiment]

The printer driver 23a of the sixth embodiment sets, in the setting-list-display-item management table 58 according to user instruction, the flag indicative of whether a corresponding setting item is to be displayed in the setting list and the sequence number indicative of a display position in the sequence of setting items of the setting list.

On the other hand, the printer driver 23a of the eighth embodiment automatically customizes a setting list without user intervention, such that when the initial settings of the setting items provided at the time of shipment from the factory differ from the current settings, these setting items different from the initial settings are displayed in the area 100 of the detail setting window 42.

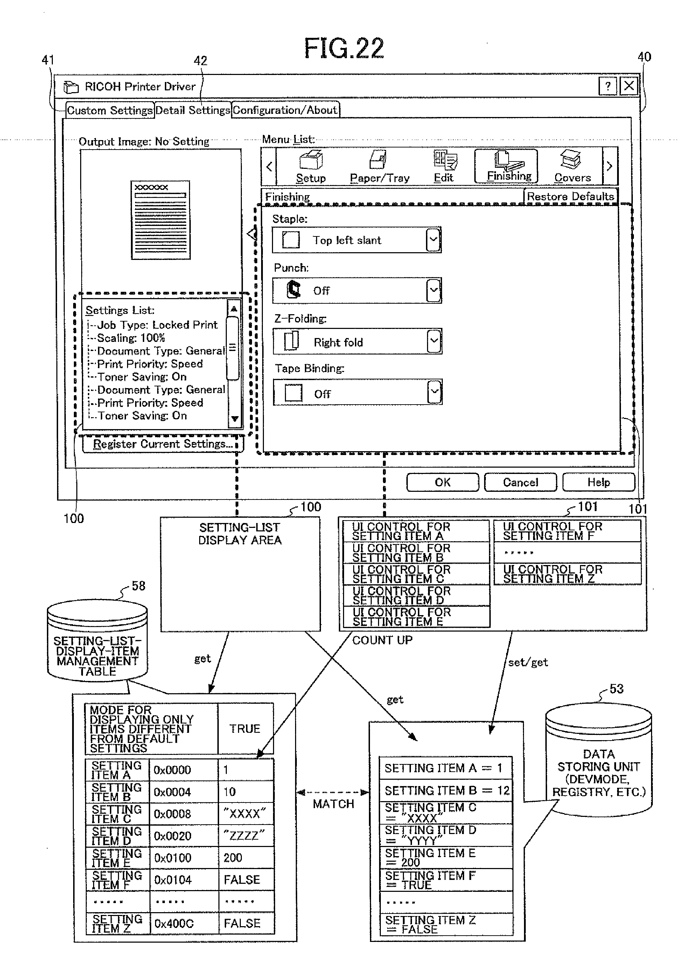

Fig. 22 is an illustrative drawing showing the process of displaying a setting list on a printer driver UI based on the current settings different from the initial settings provided at the time of shipment from the factory. The illustrative drawing of Fig. 22 differs from the illustrative drawing of Fig. 16 in the contents of the setting-list-display-item management table 58.

The setting-list-display-item management table 58 shown in Fig. 22 has an additional entry with respect to each of the setting items (i.e., each of the settings A through Z) included in the setting-list-display-item management table 58 shown in Fig. 16. This entry is the initial setting provided at the time of shipment from the factory. Further, the setting-list-display-item management table 58 shown in Fig. 22 has a flag that is used to switch the setting-list-display mode from an entire-list-display mode allowing no customization of the setting list to a differenoe-from-initial-setting mode in which only the setting items having current settings different from the initial settings provided at the time of shipment from the factory are displayed.

In the illustrative drawing shown in Fig. 22, the flag indicative of the setting-list-display mode has a Boolean value that assumes either the value "TRUE" indicating the difference-from-initial-setting mode or the value "FALSE" indicating the entire-list-display mode. In the illustrative drawing shown in Fig. 22, the sequence positions of setting items displayed in the setting list are defined as the positions of entries in the setting-list-display-item management table 58.

Accordingly, in the illustrative drawing shown in Fig. 22, only the setting items having current setting values different from initial setting values provided at the time of shipment from the factory are displayed from top to bottom in the setting list in the same order as the order of entries provided from tom to bottom in the setting-list-display-item management table 58.

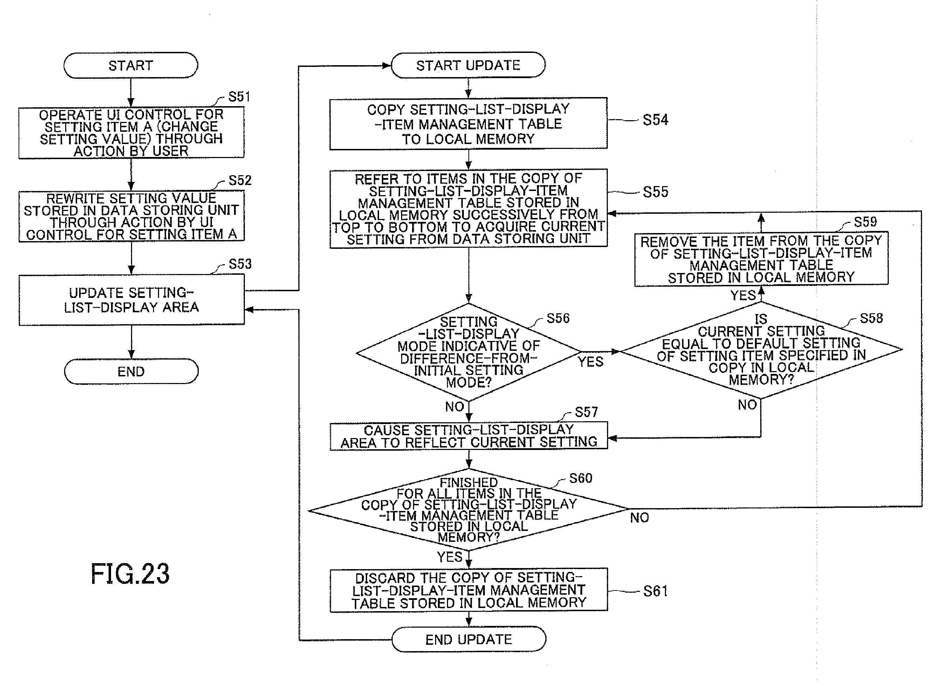

Fig. 23 is a flowchart showing a procedure of updating a setting list displayed on the printer driver UI inside a printer driver. The flowchart shown in Fig. 23 is directed to an example in which the UI control corresponding to the setting item A displayed in the area 101 of Fig. 22 is operated (i.e., to change its setting value).

The processes of steps S51 through S53 are identical to these of the steps S1 through S3 shown in the flowchart of Fig. 17, respectively. In step S54, the setting list arranging unit 55 copies all the contents of the setting-list-display-item management table 58 to a local memory. In step S55, the setting list arranging unit 55 refers to setting items in the setting-list-display-item management table 58 stored in the local memory successively from top to bottom to acquire information about the position at which the actual setting value is stored in the data storing unit 53, followed by acquiring the current setting value from the data storing unit 53.

In step S56, the setting list arranging unit 55 refers to the flag indicative of the setting-list-display mode in the copy of the setting-list-display-item management table 58 stored in the local memory to determine whether the setting-list-display mode is the difference-from-initial-setting mode.

Upon funding that the setting-list-display mode is not the difference-from-initial-setting mode (i.e., the setting-iist-dispiay mode is the entire-list-display mode), the setting list arranging unit 55 proceeds to step S57, in which the setting list arranging unit 55 causes the setting list shown in the area 100 to reflect the current setting value acquired in step S55. Upon funding that the setting-list-display mode is the difference-from-initial-setting mode, the setting list arranging unit 55 proceeds to step S58, in which the setting list arranging unit 55 checks whether the current setting value acquired in step S55 is the same as the initial setting provided at the time of shipment from the factory which is copied to the local memory.

Upon finding that the current setting value acquired in step S55 is the same as the initial setting provided at the time of shipment from the factory which is copied to the local memory, the setting list arranging unit 55 proceeds to step S59. In step S59, the setting list arranging unit 55 removes the record of the setting item having its current setting value acquired in step S55 from the copy of the setting-list-display-item management table 58 stored in the local memory.

Upon finding that the current setting value acquired in step S55 is not the same as the initial setting provided at the time of shipment from the factory which is copied to the local memory, the setting list arranging unit 55 proceeds to step S57. In step S57, the setting list arranging unit 55 causes the setting list displayed in the area 100 to reflect the current setting acquired in step S55.

When the processes in steps S55 through S59 are performed with respect to all the setting items of the setting-list-display-item management table 58 stored in the local memory, the setting list arranging unit 55 proceeds to steps S61 to discard the setting-list-display-item management table 58 stored in the local memory, and finishes updating the setting list displayed in the area 100.

Upon the update of the setting list displayed in the area 100, the UI generating and displaying unit 56 generates the detail setting window 42 in which the setting list displayed in the area 100 is updated, and displays the detail setting window 42 on the output unit 12 of the PC 2.

In this manner, the printer driver 23a displays a setting item in the setting list if this setting item has a current setting stored in the data storing unit 53 that is different from the initial setting provided at the time of shipment from the factory as set forth in the setting-list-display-item management table 58. It should be noted that the flag indicative of the setting-list-display mode in the setting-list-display-item management table 58 is set by the mode switchover unit 57. Needless to say, another tool (application) specifically provided for this purpose may alternatively be used to set the flag indicative of the setting-list-display mode in the setting-list-display-item management table 58.

In the present embodiment as described above, the printer driver 23a automatically customizes the setting list without user intervention, such that the setting items having their current settings different from the initial settings provided at the time of shipment from the factory are displayed in the area 100 of the detail setting window 42.

### [Ninth Embodiment]

In the ninth embodiment, the printer driver 23a can switch between the entire-list-display mode, a desired-selection mode, the history mode, and the difference-from-initial-setting mode to use a desired customized setting list as have been described in the sixth to eighth embodiments. Here, the desired-selection mode refers to a mode in which a user uses the sequence position and display on-off setting making unit 54 or some other tool (application) specifically provided for this purpose to manually customize the setting list as described in connection with Fig. 18 and Fig. 19.

A flag for specifying a setting list display mode may be provided in the setting-list-display-item management table 58. The user may use the mode switchover unit 57 or some other dedicated tool (application) to set this flag for specifying a setting list display mode, thereby to switch between the entire-list-display mode, the desired-selection mode, the history mode, and the difference-from-initial-setting mode.

### [Tenth Embodiment]

The mode (mode 1) which allows customization to be made to the choice and arrangement of setting items displayed in the area 43 of the custom setting window 41 and the mode (mode 2) which allows customization to be made to the setting list displayed in the area 100 of the detail setting window 42 may be combined to provide a viable combination, thereby achieving an efficient mode selection that reduces complication.

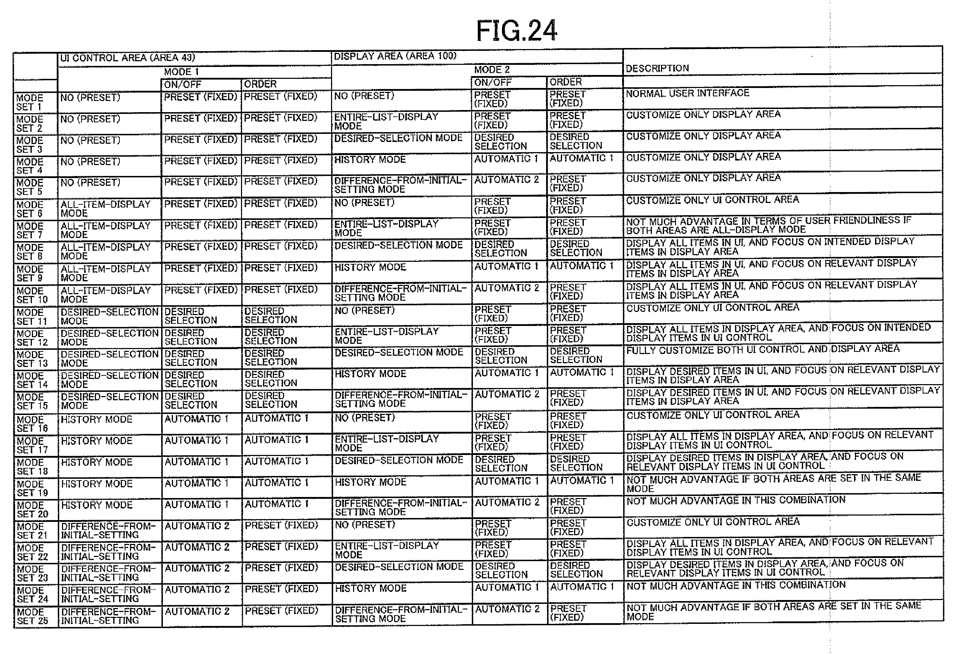

Fig. 24 is a table showing a variety of combinations between the mode 1 and the mode 2. The entry "NO (DRESET)" and the entry "ALL-SETTING-ITEM-DISPLAY MODE" provided for the mode 1 may utilize the plate-status management table 38-9, for example.

The entry "DESIRED-SELECTION MODE" provided for the mode 1 may utilize the plate-status management table 38-10, for example. The entry "HISTORY MODE" provided for the mode 1 may utilize the plate-status management table 38-11, for example. The entry "DIFFERENCE-FROM-INITIAL-SETTING MODE" provided for the mode 1 may utilize the plate-status management table 38-11, for example.

The entry "NO (PRESET)" and the entry "ENTIRE-LIST-DISPLAY MODE" provided for the mode 2 may correspond to what is shown in Fig. 16 and Fig. 17, for example. The entry "DESIRED-SELECTION MODE" provided for the mode 2 may correspond to what is shown in Fig. 18 and Fig. 19, for example. The entry "HISTORY MODE" provided for the mode 2 may correspond to what is shown in Fig. 20 and Fig. 21, for example. The entry "DIFFERENCE-FROM-INITIAL-SETTING MODE" provided for the mode 2 may correspond to what is shown in Fig. 22 and Fig. 23, for example.

Fig. 24 shows a variety of combinations between the mode 1 and the mode 2 as mode sets 1 through 25. The mode sets 1, 7, 19, 20, 24, and 25 are meaningless combinations, and, thus, may be arranged to be not settable.

For the mode set 13, the display-enabled/disabled state (ON/OFF) and the sequence position (ORDER) may be shared between the mode 1 and the mode 2, and may be operated in an exclusive manner. In the mode set 13, settings can be easily made by making shared use of the sequence position (ORDER).

For the mode set 14, the display-enabled-disabled state (ON/OFF) may be shared between the mode 1 and the mode 2. For the mode sets 15 and 23, the sequence position (ORDER) may be shared between the mode 1 and the mode 2.

The mode switchover unit 36 of the custom setting window display controlling unit 50 and the mode switchover unit 57 of the detail setting window display controlling unit 51 operate in conjunction with each other according to a selected one of the mode sets 1 through 25 as set forth in the combination table of Fig. 24.

The descriptions of the imaging apparatus of exemplary embodiments have been provided heretofore. The present invention is not limited to these embodiments, but various variations and modifications may be made without departing from the scope of the present invention. The printer driver 23 of the embodiments may be configured such that two or more plate-status management tables 38 are provided for different models of the MFP 3. Such plate-status management tables 38 may be switched from one to another in the printer driver 23, so that the printer driver 23 can serve as a universal printer driver.

By the same token, the printer driver 23a of the embodiments may be configured such that two or more setting-list-display-item management tables 58 are provided for different models of the MFP 3. Such setting-list-display-item management tables 58 may be switched from one to another in the printer driver 23a, so that the printer driver 23a can serve as a universal printer driver.

## Claims

1. A machine-readable medium having a device-driver program embodied therein for driving a peripheral device, **characterized in that** said device-driver program comprises:
a switchover unit configured to switch display screens on a user interface of the device-driver program between a first display screen in which a layout of setting items editable by a user is customizable and a second display screen different from the first display screen;
a setting item status management unit configured to store, in a setting item status management table, data indicative of a sequence position of a setting item arranged in a setting item display area of the first display screen and data indicative of a display-enabled-or-display-disabled status of the setting item;
a first arranging unit configured to arrange the setting item in the setting item display area of the first display screen in accordance with the setting item status management table;
a list status management unit configured to store, in a list status management table, data indicative of sequence positions of setting items arranged in a list display area of the second display screen and data indicative of a display-enabled-or-display-disabled status of the setting items; and
a second arranging unit configured to arrange a list of the setting items in the list display area of the second display screen in accordance with the list status management table.

2. The machine-readable medium as claimed in claim 1, wherein the list status management table allows an external software unit to make data settings to the data indicative of sequence positions of the setting items and the data indicative of a display-enabled-or-display-disabled status of the setting items according to user operation, and wherein the second arranging unit is configured to arrange the list of the setting items in the list display area of the second display screen in accordance with the data settings made by the external software unit.

3. The machine-readable medium as claimed in claim 1, wherein the device-driver program further includes a sequence position and display on-off setting making unit configured to make data settings to the data indicative of sequence positions of the setting items and the data indicative of a display-enabled-or-display-disabled status of the setting items according to user operation, wherein the second arranging unit is configured to arrange the list of the setting items in the list display area of the second display screen in accordance with the data settings made by the sequence position and display on-off setting making unit.

4. The machine-readable medium as claimed in claim 3, wherein the sequence position and display on-off setting making unit is configured to make data settings to the data indicative of sequence positions of the setting items and the data indicative of a display-enabled-or-display-disabled status of the setting items in the list status management table, such that the list of setting items are arranged in the list display area in the same order as a time sequence in which operations are performed by a user on the setting items.

5. The machine-readable medium as claimed in claim 3, wherein the sequence position and display on-off setting making unit is configured to make data settings to the data indicative of a display-enabled-or-display-disabled status of the setting items in the list status management table, such that the list of setting items having settings thereof different from initial settings are arranged in the list display area.

6. The machine-readable medium as claimed in claim 1, wherein the device-driver program further includes a mode switchover unit configured to switch list-display modes in response to a user instruction between a first mode in which the list of the setting items are displayed in the list display area in accordance with data settings made by a user to the data indicative of sequence positions of the setting items and the data indicative of a display-enabled-or-display-disabled status of the setting items, a second mode in which the list of the setting items are displayed in the list display area in the same order as a time sequence in which operations are performed by a user on the setting items, and a third mode in which the list of the setting items are displayed in the list display area such that a list of setting items having settings thereof different from initial settings are arranged in the list display area.

7. The machine-readable medium as claimed in claim 6, wherein the list-display modes are switched to match a switching over in setting-item-display modes when the setting-item-display modes are switched in response to user instruction between a first mode in which the setting item is displayed in the setting item display area in accordance with a data setting made by a user to the data indicative of a sequence position of the setting item and the data indicative of a display-enabled-or-display-disabled status of the setting item, a second mode in which the setting item is displayed in the setting item display area in the same order as a time sequence in which operations are performed by a user on each said setting item, and a third mode in which the setting item is displayed in the setting item display area such that the setting item having a setting thereof different from an initial setting is arranged in the setting item display area.

8. A method of customizing a layout of a user interface of a device driver for driving a peripheral device, **characterized in that** the method comprises:
switching display screens on a user interface of the device-driver program between a first display screen in which a layout of setting items editable by a user is customizable and a second display screen different from the first display screen;
arranging a setting item in a setting item display area of the first display screen, upon switching over to the first display screen, in accordance with a setting item status management table that stores data indicative of a sequence position of a setting item arranged in the setting item display area of the first display screen and data indicative of a display-enabled-or-display-disabled status of the setting item; and
arranging a list of setting items in a list display area of the second display screen, upon switching over to the second display screen, in accordance with a list status management table that stores data indicative of sequence positions of setting items arranged in the list display area of the second display screen and data indicative of a display-enabled-or-display-disabled status of the setting items.

9. An apparatus, **characterized by** comprising:
a memory unit configured to store a device-driver program; and
a computing unit configured to execute the device-driver program stored in the memory unit to control a peripheral device and further configured to cause a display device to display a user interface of the device-driver program, said device-driver program comprising:
a switchover unit configured to switch display screens on the user interface of the device-driver program between a first display screen in which a layout of setting items editable by a user is customizable and a second display screen different from the first display screen;
a setting item status management unit configured to store, in a setting item status management table, data indicative of a sequence position of a setting item arranged in a setting item display area of the first display screen and data indicative of a display-enabled-or-display-disabled status of the setting item;
a first arranging unit configured to arrange the setting item in the setting item display area of the first display screen in accordance with the setting item status management table;
a list status management unit configured to store, in a list status management table, data indicative of sequence positions of setting items arranged in a list display area of the second display screen and data indicative of a display-enabled-or-display-disabled status of the setting items; and
a second arranging unit configured to arrange a list of the setting items in the list display area of the second display screen in accordance with the list status management table.
